# EUROPÄISCHE PATENTSCHRIFT

(11) **EP 2 668 070 B1**
(45) Veröffentlichungstag und Bekanntmachung des Hinweises auf die Patenterteilung: **15.06.2016**
(21) Anmeldenummer: 12704378.4
(22) Anmeldetag: 26.01.2012
(51) Int. Cl.: B60R 21/36

(54) **GASSACKANORDNUNG FÜR EIN KRAFTFAHRZEUG**
AIRBAG DEVICE FOR MOTOR VEHICLE
DISPOSITIF DE COUSSIN GONFLABLE POUR UN VÉHICULE AUTOMOBILE

(30) Priorität: 27.01.2011 DE 102011010263; 31.08.2011 DE 102011081889; 27.10.2011 DE 102011085330; 25.11.2011 DE 202011052110 U
(43) Veröffentlichungstag der Anmeldung: 04.12.2013
(73) Patentinhaber: Takata AG, 63743 Aschaffenburg (DE)
(72) Erfinder: KALLISKE, Ingo, 14476 Potsdam (DE); MARKFORT, Dieter, 13088 Berlin (DE); KISLER, Walter, 12679 Berlin (DE); PAUSCH, Tobias, 10435 Berlin (DE); STEINKE, Normen, 10785 Berlin (DE)
(74) Vertreter: Maikowski & Ninnemann
(86) Internationale Anmeldenummer: PCT/EP2012/051188
(87) Internationale Veröffentlichungsnummer: WO 2012/101196

(56) Entgegenhaltungen:
- EP-A1- 1 350 692
- EP-A1- 1 997 695
- DE-A1-102005 023 490
- DE-A1-102005 039 418
- DE-A1-102006 010 953
- JP-A- 8 276 816

## Beschreibung

Die Erfindung betrifft eine Gassackanordnung für ein Kraftfahrzeug gemäß Anspruch 1.

Aus dem Stand der Technik sind Gassackanordnungen zum Schutz von außerhalb des Fahrzeugs befindlichen Personen bekannt. Beispielsweise beschreibt die DE 101 38 449 A1 einen derartigen Gassack. Eine Schwierigkeit bei derartigen Gassackanordnungen besteht darin, den Gassack nach einer Auslösung (z.B. auch nach einer Fehlauslösung) aus dem Sichtfeld eines Fahrzeuginsassen (insbesondere des Fahrers) zu entfernen.

Die EP 1 997 695 A1 offenbart eine Gassackanordnung für ein Kraftfahrzeug gemäß dem Oberbegriff des Anspruchs 1.

Das der vorliegenden Erfindung zugrunde liegende Problem besteht daher darin, eine Gassackanordnung zum Schutz einer sich außerhalb des Fahrzeugs befindlichen Person zu schaffen, deren Gassack möglichst schnell und möglichst vollständig aus dem Sichtfeld eines Fahrzeuginsassen heraus bewegbar ist.

Dieses Problem wird durch die Gassackanordnung mit den Merkmalen gemäß Anspruch 1 gelöst. Weiterbildungen der Erfindung sind in den abhängigen Ansprüchen angegeben.

Danach wird eine Gassackanordnung für ein Kraftfahrzeug bereitgestellt, mit
- einem Gassack, der zum Schutz einer sich außerhalb des Fahrzeugs befindlichen Person entlang zumindest eines Teilabschnitts der Außenseite der Frontscheibe oder eines sonstigen Abschnitts einer Außenseite des Kraftfahrzeugs entfaltbar ist;
- mindestens einer Druckreduzierungsvorrichtung zum Reduzieren des Innendruckes zumindest eines Teilbereichs des zumindest teilweise aufgeblasenen Gassacks, und
- eine Einrichtung zum Bewegen zumindest eines Teilabschnitts des zumindest teilweise aufgeblasenen Gassacks aus dem Sichtfeld eines Fahrzeuginsassen des Fahrzeugs.

Mit Hilfe der Druckreduzierungsvorrichtung kann der Gassackinnendruck nach dem Aufblasen des Gassacks abgesenkt werden, wodurch das Rückholen des Gassacks (z.B. auf seine Ausgangsposition zu), d.h. das Entfernen des Gassacks aus dem Sichtfeld eines Fahrzeuginsassen, erleichtert und insbesondere beschleunigt wird. Darüber hinaus muss die Einrichtung zum Bewegen des Gassacks aus dem Sichtfeld (Rückholeinrichtung), nicht gegen den vergleichsweise hohen Innendruck des aufgeblasene Gassacks arbeiten, so dass die für das Rückholen des Gassacks erforderliche Rückholkraft reduziert ist, woraus sich Vorteile bei der Auslegung (z.B. der Dimensionierung) von Bauteilen der Rückholeinrichtung ergeben können; z.B. ist ein kompakteres Design der Rückholeinrichtung möglich.

Die Druckreduzierungsvorrichtung ist beispielsweise über eine Steuerungseinrichtung (insbesondere in Form einer ECU - electronic control unit (elektronische Steuerungseinrichtung)) des Fahrzeugs zu einem vorgebbaren Zeitpunkt (z.B. nach Ablauf einer vorgebbaren Zeitspanne nach dem Beginn des Aufblasens des Gassacks oder zu einem vorgebbaren Zeitpunkt, welcher in Abhängigkeit von anderen crashrelevanten Parametern ermittelt wurde) aktivierbar. Insbesondere wird der Druckreduzierungsvorrichtung nach Ablauf einer vorgebbaren Zeitspanne nach Beginn des Aufblasens des Gassacks ein elektrisches Steuersignal der Steuerungseinrichtung zugeleitet, das die Druckreduzierungsvorrichtung aktiviert, d.h. die Druckreduzierungsvorrichtung beginnt nach Empfang des Steuersignals mit der Reduzierung des Gassackinnendruckes.

Denkbar ist, dass die Druckreduzierungsvorrichtung mindestens eine in dem Gassack vorgesehene Ausströmöffnung umfasst sowie eine Abdeckvorrichtung, die die Ausströmöffnung vor dem Aktivieren der Druckreduzierungsvorrichtung zumindest teilweise verschließt und nach dem Aktivieren der Druckreduzierungsvorrichtung zumindest teilweise freigibt (d.h. zumindest weniger verschließt). Beispielsweise umfasst die Abdeckvorrichtung einen Aktuator, etwa in Form eines Bandes, das die Ausströmöffnung vor Aktivierung der Druckreduzierungsvorrichtung zumindest teilweise abdeckt und das sich nach Aktivierung der Druckreduzierungsvorrichtung relativ zu der Ausströmöffnung so bewegt, dass es die Ausströmöffnung weniger abdeckt oder ganz freigibt. Mögliche Varianten einer derartigen steuerbaren Ausströmöffnung sind in der deutschen Patentanmeldung DE 10 2005 039 418 beschrieben, auf die insofern hiermit ausdrücklich Bezug genommen wird.

Gemäß einem anderen Ausführungsbeispiel der Erfindung weist die Abdeckvorrichtung mindestens ein aufblasbares Element auf, das mit dem Gassack so zusammenwirkt, dass es die Ausströmöffnung vor Aktivieren der Druckreduzierungsvorrichtung zumindest teilweise verschließt und nach dem Aktivieren der Druckreduzierungsvorrichtung weniger verschließt oder vollständig freigibt.

Beispielsweise ist das aufblasbare Element im Bereich der Ausströmöffnung lösbar mit dem Gassack verbunden (z.B. über eine Reißnaht). Denkbar ist, dass die Druckreduzierungsvorrichtung eine Gasbereitstellungseinrichtung umfasst, die bei Aktivieren der Druckreduzierungsvorrichtung das aufblasbare Element derart aufbläst, dass es sich von dem Gassack löst und die Ausströmöffnung freigibt. Bei der Gasbereitstellungseinrichtung handelt es sich insbesondere um einen von einem Gasgenerator, der zum Aufblasen des (Schutz-)Gassacks dient, verschiedenen Gasgenerator (z.B. einen pyrotechnischen Gasgenerator). Denkbar ist, dass sich das aufblasbare Element entlang einer Außenseite des Gassacks erstreckt. Dies ist jedoch nicht zwingend; vielmehr kann das aufblasbare Element zumindest abschnittsweise auch im Innern des Gassacks angeordnet sein.

Nach einer anderen Variante der Erfindung weist die Druckreduzierungsvorrichtung eine Kühlmittelbereitstellungseinrichtung zum Erzeugen oder Einbringen eines Kühlmittels in den zumindest teilweise aufgeblasenen Gassack auf. Beispielsweise wird das Kühlmittel in den Gassack eingesprüht. Durch das Einbringen des Kühlmittels in den Gassack oder das Erzeugen des Kühlmittels durch eine im Gassack angeordnete Einrichtung kühlt sich das im Gassack vorhandene Gas (insbesondere schlagartig) ab, wodurch der Gassackinnendruck abgesenkt wird. Eine geeignete Einrichtung zum Einbringen eines Kühlmittels in den Gassack ist in der deutschen Patentanmeldung DE 10 2006 010 953 beschrieben, auf die hiermit insofern ausdrücklich Bezug genommen wird.

Gemäß einer weiteren Ausgestaltung der Erfindung weist die Druckreduzierungsvorrichtung eine Ausströmöffnungserzeugungseinrichtung auf, die bei Aktivieren der Druckreduzierungsvorrichtung thermisch und/oder mechanisch auf den Gassack einwirkt und eine Ausströmöffnung in dem Gassack erzeugt. Beispielsweise umfasst die Ausströmöffnungserzeugungseinrichtung ein Werkzeug (z.B. eine Klinge oder ein sonstiges geeignetes Element), das nach Aktivieren der Druckreduzierungsvorrichtung (etwa über einen mit dem Werkzeug zusammenwirkenden Aktuator) so in mechanischen Kontakt mit dem Gassack (d.h. mit der Gassackhülle, die eine aufblasbare Kammer des Gassacks begrenzt) gebracht wird, dass in der Gassackhülle des Gassacks die Ausströmöffnung entsteht. Beispielsweise wird die Gassackhülle durch den Kontakt mit dem Werkzeug (lokal) zerstört oder es wird lediglich ein in der Gassackhülle vorgesehener Aufreißbereich geöffnet. Bei dem mit dem Werkzeug zusammenwirkenden Aktuator handelt es sich z.B. um ein elastisches Element oder einen ein elastisches Element aufweisenden Mechanismus (z.B. in Form eines vorgespannten Federmechanismus) oder eine pyrotechnische Einheit.

Alternativ oder zusätzlich zum einem mechanischen Erzeugen der Ausströmöffnung in der Gassackhülle kann die Druckreduzierungsvorrichtung auch eine Einrichtung zum thermischen Einwirken auf die Gassackhülle aufweisen, z.B. eine Gaserzeugungseinrichtung (insbesondere in Form einer pyrotechnischen Einheit), die bei Aktivieren der Druckreduzierungsvorrichtung heiße Gase erzeugt, die auf die Gassackhülle einwirken. Insbesondere handelt es sich bei der Gaserzeugungseinrichtung um eine zu einem Gasgenerator zum Aufblasen des Gassacks separate Einrichtung. Die Ausströmöffnungserzeugungseinrichtung ist insbesondere am Fahrzeug angeordnet; denkbar ist jedoch auch, dass die Ausströmöffnungserzeugungseinrichtung (z.B. eine pyrotechnischen Einheit zum thermischen Erzeugen einer Ausströmöffnung) am Gassack (insbesondere an dessen Gassackhülle) angeordnet ist.

Denkbar ist auch, dass die Ausströmöffnung des Gassacks so angeordnet ist, dass der Gassack beim Freigeben der Ausströmöffnung einen Rückstoß erfährt, der den Gassack zumindest teilweise aus dem Sichtfeld des Fahrers bewegt.

Es wird darauf hingewiesen, dass unterschiedliche Realisierungen der Druckreduzierungsvorrichtung auch in Kombination miteinander verwendet werden können. So ist es z.B. möglich, die Gassackanordnung sowohl mit einer Abdeckvorrichtung zum Abdecken und Freigeben einer Ausströmöffnung des Gassacks als auch mit einer Kühlmittelbereitstellungseinrichtung auszustatten. Denkbar ist z.B. auch, dass die Druckreduzierungsvorrichtung in einem Bereich des Gassacks angeordnet ist, der nach dem Aufblasen des Gassacks aus dem Bereich der Frontscheibe entfernt werden soll, um ein Sichtfeld freizugeben. Beispielsweise ist die Druckreduzierungsvorrichtung (insbesondere gemäß einer der oben geschilderten Ausführungsformen) fahrerseitig (z.B. an eine fahrerseitigen Randbereich des Gassacks) angeordnet. Möglich ist jedoch auch, dass die Druckreduzierungsvorrichtung auf der Beifahrerseite (z.B. dort ebenfalls an einem Randbereich des Gassacks) angeordnet ist oder sowohl auf der Fahrer- als auch auf der Beifahrerseite jeweils mindestens eine Druckreduzierungsvorrichtung vorhanden ist, z.B. jeweils mindestens eine Ausströmöffnung. Möglich ist auch, dass, wenn der Gassack sowohl auf der Fahrer- als auch auf der Beifahrerseite zurückgeholt werden soll, eine Druckreduzierungsvorrichtung etwa mittig (bezogen auf die Fahrzeugquerrichtung) vorgesehen ist. Der Querschnitt der zu öffnenden Abströmöffnung bzw. die eingesprühte Kühlmenge muss in diesem Fall u.U. erhöht werden.

Beispielsweise bewegt die Einrichtung zum Bewegen den Gassack zumindest teilweise in Richtung auf seine Ausgangsposition, in der er sich vor dem Aufblasen befand, von dem Sichtfeld weg. Möglich ist auch, dass der aufgeblasene Gassack mittels der Einrichtung zum Bewegen zumindest teilweise (z.B. auch vollständig) von dem Fahrzeug gelöst wird.

Die Einrichtung zum Bewegen ist z.B. selbststeuernd ausgebildet, so dass die durch die Einrichtung auf den Gassack ausübte Kraft zumindest einen Teilabschnitt des aufgeblasenen Gassacks aus dem Sichtfeld eines Fahrzeuginsassen bewegt, sobald der Gassackinnendruck unter einen vorgebbaren Wert fällt. Mit anderen Worten wird der Einrichtung zum Bewegen zum Auslösen kein elektrisches Steuersignal einer Steuerungseinrichtung des Fahrzeugs übermittelt, sondern die Einrichtung wirkt (insbesondere mechanisch) unmittelbar mit dem Gassack zusammen, so dass sie bei einem Absinken des Gassackinnendrucks unter den vorgebbaren Wert automatisch beginnt, den Gassack aus dem Sichtfeld weg zu bewegen. Möglich ist natürlich auch, dass die Einrichtung zum Bewegen nicht selbststeuernd ausgelegt, sondern so ausgebildet ist, dass sie über ein Steuersignal einer Steuereinrichtung (insbesondere einer ECU des Fahrzeugs) aktivierbar ist.

Beispielsweise umfasst die Einrichtung zum Bewegen mindestens ein Verbindungselement (z.B. in Form eines Bandes), das mit einem ersten Abschnitt mit dem Gassack verbunden und mit einem zweiten Abschnitt ebenfalls mit dem Gassack verbunden oder mit dem Fahrzeug verbindbar ist.

Denkbar ist, dass das Verbindungselement zumindest abschnittweise elastisch ausgeformt ist, d.h. in Form eines mit dem Gassack verbundenen elastischen Elementes (z.B. ein elastisches Fangband). Das elastische Verbindungselement ist z.B. so angeordnet und ausgebildet, dass es den aufgeblasenen Gassack nach einer vorgebbaren Zeitspanne nach dem Aktivieren des Gassacks oder bei einem vorgebbaren Abfall des Gassackinnendruckes nach Erreichen eines Maximaldruckes aus dem Sichtfeld des Fahrers bewegt. Die Zeitspanne bzw. der Innendruck, nach der (bei dem) der Gassack aus dem Sichtfeld bewegt werden soll, kann insbesondere über die Dimensionierung und/oder das Material des elastischen Elementes vorgegeben werden, wobei das Verbindungselement den Gassack aus dem Sichtfeld zieht, wenn die durch den Innendruck des Gassacks auf das elastische Verbindungselement wirkende Kraft durch die Druckreduzierung nach Auslösen der Druckreduzierungsvorrichtung kleiner wird als die durch das elastische Verbindungselement auf den Gassack wirkende Rückstellkraft. Beispielsweise ist das Verbindungselement derart elastisch ausgebildet, dass sich seine Länge beim Entfalten des Gassacks um mindestens 20% oder um mindestens 30% vergrößert.

Das Verbindungselement kann zumindest abschnittsweise außerhalb des Gassacks verlaufen, wobei es z.B. mit einer Außenseite des Gassacks verbunden ist. Möglich ist jedoch auch, dass sich das Verbindungselement zumindest teilweise innerhalb des Gassacks erstreckt und z.B. mit einer Innenseite des Gassacks verbunden ist.

Des Weiteren kann die Einrichtung zum Bewegen Rückstellkrafterzeugungsmittel zum Erzeugen einer Rückstellkraft auf den zumindest teilweise aufgeblasenen Gassack aufweisen, wobei das (z.B. selber nicht elastisch ausgebildete) Verbindungselement über die Rückstellkrafterzeugungsmittel mit dem Gassack verbunden oder mit dem Fahrzeug verbindbar ist. Beispielsweise umfassen die Rückstellkrafterzeugungsmittel ein elastisches Element oder einen elastisch ausgebildeten Bereich (z.B. einen Bereich eines Gehäuses) der Gassackanordnung.

Möglich ist auch, dass die Rückstellkrafterzeugungsmittel eine mit dem Verbindungselement zusammenwirkende Feder aufweisen, die sich unter dem beim Entfalten des Gassacks auftretenden Zug des Verbindungselementes spannt, d.h. das Verbindungselement ist über die Rückstellkrafterzeugungsmittel vorspannbar. In einer Variante der Erfindung weisen die Rückstellkrafterzeugungsmittel eine Aufwickeleinrichtung (etwa in Form einer Aufwickelspule) zum Aufwickeln des Verbindungselementes auf, wobei die Aufwickeleinrichtung über eine Welle mit der als Spiralfeder ausgebildeten Feder zusammenwirkt.

Gemäß einer weiteren Ausgestaltung der erfindungsgemäßen Gassackanordnung weist der Gassack einen ersten und einen zweiten Teilbereich auf, wobei die Druckreduzierungsvorrichtung so ausgebildet und angeordnet ist, dass der Druckabfall (z.B. in einer bestimmten Zeitspanne) nach Aktivieren der Druckreduzierungsvorrichtung im ersten Teilbereich größer ist als im zweiten Teilbereich.

Denkbar ist, dass sich der Innendruck des zweiten Teilbereichs des Gassacks (im Unterschied zum Innendruck im ersten Teilbereich) nach Aktivieren der Druckreduzierungsvorrichtung im Wesentlichen nicht verändert. Beispielsweise ist das oben erwähnte (z.B. in Form eines elastischen Bandes ausgebildete) Verbindungselement der Rückholeinrichtung mit seinem ersten Abschnitt (z.B. ein erstes Ende) mit dem ersten Teilbereich des Gassacks verbunden und mit seinem zweiten Abschnitt (z.B. ein zweites Ende) mit dem zweiten Teilbereich des Gassacks. Möglich ist, dass die Druckreduzierungsvorrichtung so im ersten Teilbereich des Gassacks positioniert ist, dass der Abstand zwischen der Druckreduzierungsvorrichtung und dem ersten Ende des Verbindungselementes kleiner ist als der Abstand zwischen der Druckreduzierungsvorrichtung und dem zweiten Ende des Verbindungselementes. Denkbar ist natürlich auch, dass mehrere Verbindungselemente vorgesehen sind, die jeweils mit dem ersten und dem zweiten Teilbereich des Gassacks verbunden sind.

Darüber hinaus kann sich der erste Teilbereich des aufgeblasenen Gassacks, mit dem der erste Endabschnitt des Verbindungselementes (bzw. die ersten Endabschnitte der Verbindungselemente) verbunden ist, im Sichtbereich eines auf einem Vordersitz des Fahrzeuges befindlichen Fahrzeuginsassen erstrecken, z.B. entlang der Frontscheibe auf der Fahrerseite. Der zweite Endabschnitt des Verbindungselementes ist hingegen beabstandet von dem ersten Endabschnitt (d.h. vom ersten Teilbereich des Gassacks) mit dem zweiten Teilbereich des Gassacks verbunden.

Da sich der Innendruck des zweiten Teilbereichs des Gassacks nach dem Auslösen der Druckreduzierungsvorrichtung zumindest im Wesentlichen nicht verändert, behält auch der mit dem zweiten Teilbereich verbundene zweite Endabschnitt des Verbindungselementes seine Position (relativ zum Fahrzeug) zumindest im Wesentlichen bei, so dass, wenn die durch den Innendruck im ersten Teilbereich des Gassacks auf das (elastische) Verbindungselement wirkende Kraft durch die Druckreduzierung nach Auslösen der Druckreduzierungsvorrichtung kleiner wird als die durch das Verbindungselement auf den ersten Teilbereich wirkende Rückstellkraft, der erste Teilbereich aus seiner Schutzposition und somit aus dem Sichtfeld in Richtung auf den zweiten Teilbereich des Gassacks weg bewegt wird.

Möglich ist auch, dass das Verbindungselement (das insbesondere als elastisches Element in Form eines Fangbandes ausgebildet ist) derart mit einem Endabschnitt oder mit seinen beiden Endabschnitten am Gassack befestigt ist, dass es bei einem Abfall des Gassackinnendruckes zumindest einen Teilbereich des Gassacks zumindest näherungsweise in Fahrzeugquerrichtung bewegt. Beispielsweise verläuft das Verbindungselement nach Aufblasen des Gassacks zumindest näherungsweise in Fahrzeugquerrichtung.

Das Verbindungselement kann auch mit einem mit Gas befüllbaren (aufblasbaren) Element (z.B. in Form eines Straffschlauches) gekoppelt sein, das nach Aktivieren des Gassacks mit Gas befüllt wird, so dass sich das befüllbare Element ausdehnt und das elastische oder vorspannbare Element spannt. Denkbar ist auch, dass die Gassackanordnung Mittel (z.B. eine Stufe eines mehrstufigen Gasgenerators) zum Befüllen des befüllbaren Elementes aufweist, die zum einem vorgebbaren Zeitpunkt nach Aufblasen des Gassacks aktivierbar sind.

In einer anderen Ausgestaltung der Erfindung ist der Gassack über mindestens einen ersten und einen zweiten (insbesondere vorgespannten) Verbindungsbereich mit dem Fahrzeug verbunden, wobei die Gassackanordnung Mittel zum Freigeben des Gassacks aufweist, die nach einer vorgebbaren Zeitspanne nach dem Aktivieren des Gassacks (d.h. dem Beginn des Aufblasens des Gassacks) oder bei einem vorgebbaren Abfall des Gassackinnendruckes die Verbindung des Gassacks mit dem Fahrzeug über einen der Verbindungsbereiche lösen, so dass sich der Gassack aufgrund der noch bestehenden Vorspannung über den anderen Verbindungsbereich und/oder aufgrund des einwirkenden Fahrtwindes aus dem Sichtfeld des Fahrers bewegt.

Beispielsweise ist der zweite Verbindungsbereich über ein elastisches Verbindungselement (insbesondere in Form eines Fangbandes) mit dem Fahrzeug (oder einem anderen Bereich des Gassacks) verbunden. Der erste Verbindungsbereich ist z.B. über eine Abdeckvorrichtung (z.B. ebenfalls in Form eines Fangbandes oder eines wie oben beschriebenen aufblasbaren Elementes) zum Freigeben einer Ausströmöffnung (s.o.) mit dem Fahrzeug verbunden, wobei sich die Abdeckvorrichtung nach Auslösen der Druckreduzierungsvorrichtung vollständig vom Gassack löst und somit nicht nur die Ausströmöffnung, sondern auch den Abschnitt des Gassacks mit dem ersten Verbindungsbereich und somit das Sichtfeld freigibt.

Es ist auch denkbar, dass das Verbindungselement gleichzeitig als Abdeckvorrichtung der Druckreduzierungsvorrichtung zum Abdecken und Freigeben einer Ausströmöffnung (s.o.) wirkt oder mit einer derartigen Abdeckvorrichtung zusammenwirkt. Darüber hinaus wird darauf hingewiesen, dass die Einrichtung zum Bewegen des Gassacks aus dem Sichtfeld nicht zwingend notwendig ist. Denkbar ist auch, dass sich der Gassack ausschließlich aufgrund des abnehmenden Innendrucks zumindest zum Teil aus dem Sichtfeld heraus bewegt (z.B. kann der Gassack zumindest abschnittsweise aufgrund der Gravitation in sich zusammenfallen).

Die Erfindung betrifft auch ein Fahrzeug mit einer erfindungsgemäßen Gassackanordnung.

Die Erfindung wird im Folgenden anhand von Ausführungsbeispielen unter Bezugnahme auf die Figuren näher erläutert. Es zeigen:
- Fig. 1: eine Gassackanordnung gemäß einem ersten Ausführungsbeispiel der Erfindung;
- Fig. 2: die Gassackanordnung aus Fig. 1 nach Auslösen der Druckreduzierungsvorrichtung;
- Fig. 3: eine Rückholmechanik der Gassackanordnung der Fig. 1 und 2 in Explosionsdarstellung;
- Fig. 4A-C: eine Ausgestaltung der Druckreduzierungsvorrichtung der Gassackanordnung der Fig. 1 und 2;
- Fig. 5: eine Gassackanordnung gemäß einem zweiten Ausführungsbeispiel der Erfindung;
- Fig. 6: eine Gassackanordnung gemäß einem dritten Ausführungsbeispiel der Erfindung;
- Fig. 7: eine Gassackanordnung gemäß einem vierten Ausführungsbeispiel der Erfindung;
- Fig. 8: eine Gassackanordnung gemäß einem fünften Ausführungsbeispiel der Erfindung;
- Fig. 9: eine Gassackanordnung gemäß einem sechsten Ausführungsbeispiel der Erfindung;
- Fig. 10: eine Gassackanordnung gemäß einem siebten Ausführungsbeispiel der Erfindung;
- Fig. 11: eine Gassackanordnung gemäß einem achten Ausführungsbeispiel der Erfindung;
- Fig. 12: eine Gassackanordnung gemäß einem neunten Ausführungsbeispiel der Erfindung;
- Fig. 13A: eine Gassackanordnung gemäß einem zehnten Ausführungsbeispiel der Erfindung;
- Fig. 13B: die Gassackanordnung aus Fig. 13A nach Aktivieren der Druckreduzierungsvorrichtung;
- Fig. 14: eine Gassackanordnung gemäß einem zehnten Ausführungsbeispiel der Erfindung; und
- Fig. 15: eine Abwandlung des Ausführungsbeispiels aus Fig. 14.

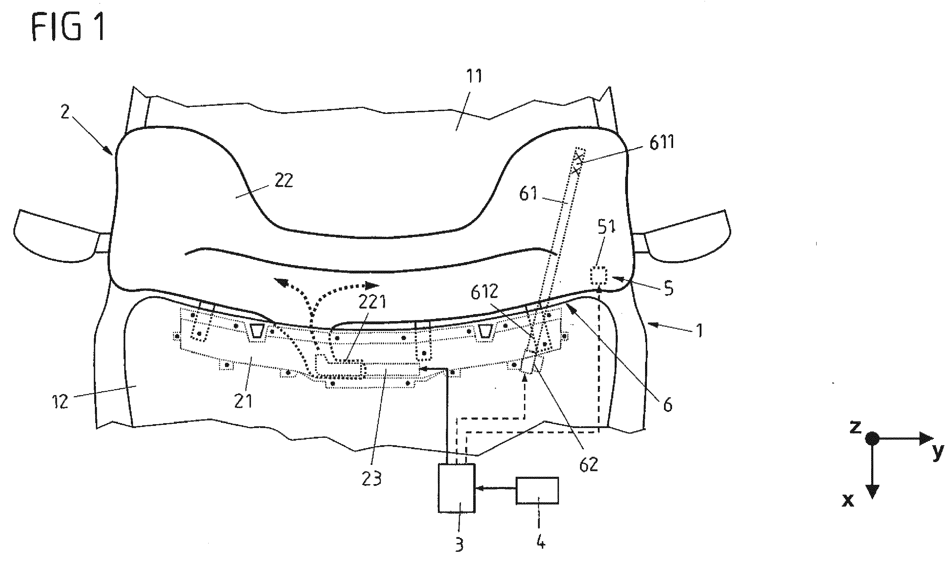

Fig. 1 zeigt in Draufsicht eine an einem Kraftfahrzeug 1 angeordnete erfindungsgemäße Gassackanordnung 2 nach dem Aufblasen ihres Gassacks 22, so dass der Gassack 22 einen Teil einer Frontscheibe 11 des Fahrzeugs 1 abdeckt. Die Gassackanordnung weist des Weiteren ein unterhalb einer Motorhaube 12 des Fahrzeugs 1 angeordnetes Gassackmodulgehäuse 21 auf, aus dem heraus sich der Gassack 22 in Richtung auf die Frontscheibe 11 entfaltet hat. Zum Aufblasen des Gassacks 22 weist die Gassackanordnung 2 zudem einen innerhalb des Modulgehäuses 21 befindlichen Gasgenerator 23 auf, der in einen Einblasbereich 221 des Gassacks 22 hineinragt.

Das Aufblasen des Gassacks 22 über den Gasgenerator 23 erfolgt in Abhängigkeit eines Steuersignals einer ECU 3, wobei über Sensoren 4 erfasste Parameter bzgl. des Fahrzeugzustandes von der ECU 3 verarbeitet werden. Werden im Fall einer unmittelbar bevorstehenden oder bereits begonnenen Kollision mit einer außerhalb des Fahrzeugs befindlichen Person ermittelte oder hinterlegte Schwell- bzw. Grenzwertewerte überschritten, erzeugt die ECU 3 zur Aktivierung des Gasgenerators 23 ein Steuersignal, worauf der Gassack 22 durch die durch den Gasgenerator 23 erzeugten Gase aufgeblasen wird.

Ein eine bei einer Kollision auf das Fahrzeug aufprallende Person schützender Bereich des Gassackes 22 (der Schutzbereich des Gassacks, d.h. insbesondere derjenige Bereich des Gassacks, der sich über die Frontscheibe 11 und einen der Frontscheibe 11 zugewandten Abschnitt der Motorhaube 12 und die sonstige vordere Fahrzeugkarosserie erstreckt) befindet sich z.B. vollkommen außerhalb des durch die Motorhaube abgedeckten Motorraums. Der Schutzbereich des Gassacks 22 deckt insbesondere den unteren Bereich der Frontscheibe 11 sowie z.B. auch Bereiche der an die Frontscheibe 11 angrenzenden beiden A-Säulen des Fahrzeugs ab.

Des Weiteren weist die Gassackanordnung 2 eine Einrichtung (Rückholeinrichtung 6) zum Bewegen des aufgeblasenen Gassacks aus dem Sichtfeld des Fahrzeugführers heraus auf. Die Rückholeinrichtung 6 ist vorliegend auf der Fahrerseite angeordnet (alternativ oder zusätzlich auch auf der Beifahrerseite möglich) und soll nach der Entfaltung des Gassackes 22 und dem eventuellen Aufprall einer Person die Sicht nach vorn, speziell für den Fahrzeugführer, wieder ermöglichen.

Die Rückholeinrichtung 6 kann selbststeuernd ausgelegt und/oder über die ECU 3 ansteuerbar und aktivierbar sein. Beispielsweise umfasst die Rückholeinrichtung 6 ein Verbindungselement in Form eines Rückholbandes 61, das mit einem ersten Ende 611 mit dem Gassack 22 verbunden ist (und zwar an seiner der Frontscheibe 11 zugewandten Seite). Das zweite Ende 612 des Rückholbandes 61 ist mit Rückstellkrafterzeugungsmittel in Form einer (z.B. im Modulgehäuse 21 angeordneten oder mit dem Gehäuse 21 verbundenen) Rückholmechanik 62 gekoppelt und über die Rückholmechanik 62 mit dem Fahrzeug 1 verbunden.

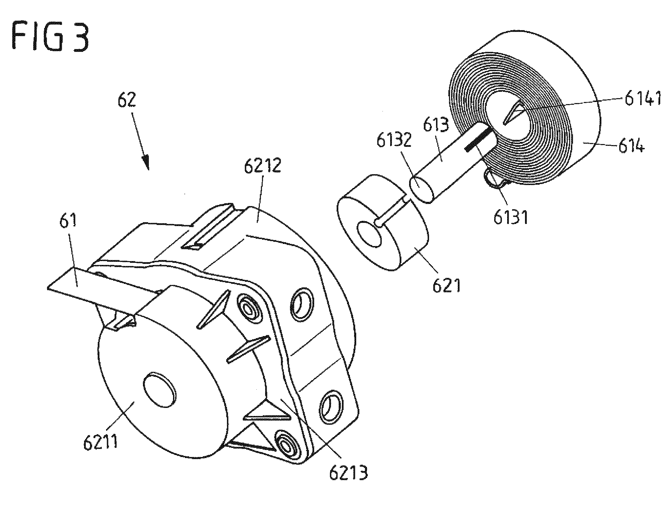

Die Rückholmechanik 62 weist z.B. eine mit einer Spiralfeder zusammenwirkende Aufwickelspule auf, wie anhand der Fig. 3 noch näher erläutert werden wird. Bei der Entfaltung des Gassackes 22 entsteht durch den sich im Gassackinneren aufbauenden Druck eine Kraft, die über das Rückholband 61 auf die Aufwickelspule übertragen wird, so dass sich die Spiralfeder spannt. Die Spiralfeder wird dabei aufgewickelt. Sinkt der Gassackinnendruck, reduziert sich die auf die Aufwickelspule übertragene Kraft, worauf sich die Spiralfeder wieder abwickelt (sich entspannt) und dabei das Rückholband 61 und damit den Gassack 22 aus dem Sichtfeld des Fahrzeugführers zurückzieht.

Denkbar ist auch, dass die Rückholeinrichtung 6 so ausgestaltet ist, dass sie über ein Signal der ECU 3 ausgelöst wird. In diesem Fall weist die Rückholmechanik 62 z.B. einen Aktuator auf, der den Rückholvorgang realisiert. Als Aktuator könnte beispielsweise ein Elektromotor, welcher die Aufwickelspule antreibt, oder eine pyrotechnisch angetriebene Kolben-Zylindereinheit vorgesehen sein.

Darüber hinaus weist die Gassackanordnung 2 eine Druckreduzierungsvorrichtung 5 zum Reduzieren des Innendruckes des aufgeblasenen Gassacks 22 auf. Durch ein Absenken des Gassackinnendrucks wird ein Bewegen des Gassacks 22 aus dem Sichtfeld eines Fahrzeuginsassen heraus mittels der Rückholeinrichtung 6 vereinfacht und beschleunigt, da die Rückholmechanik 6 gegen einen geringeren Gassackinnendruck arbeiten muss.

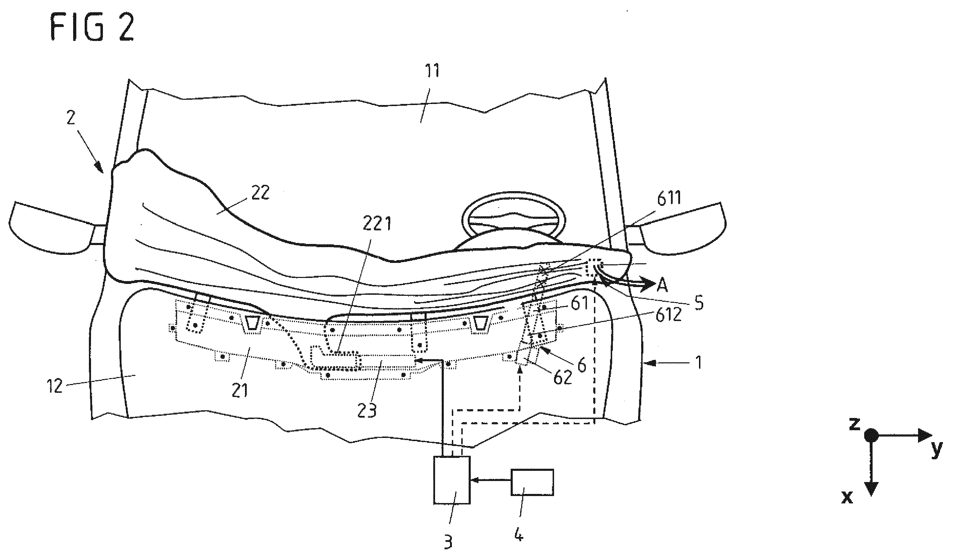

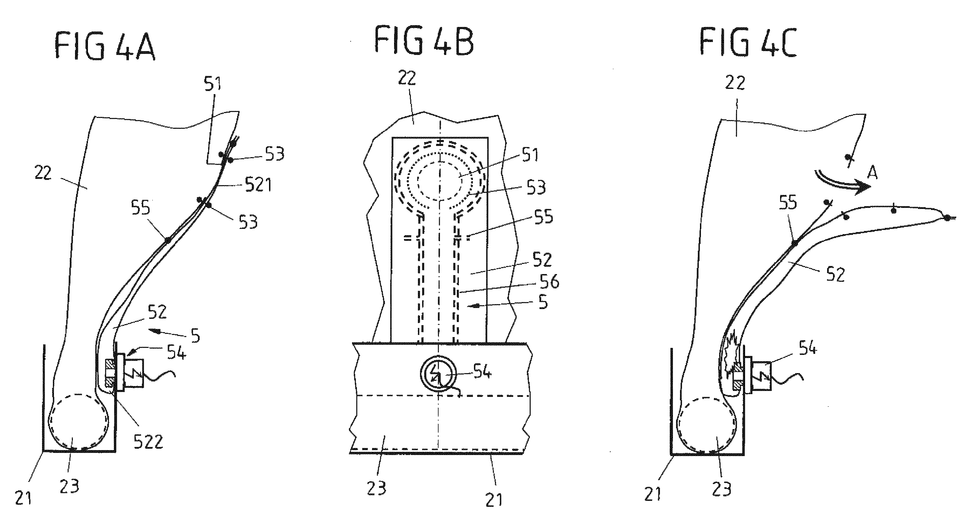

Die Druckreduzierungsvorrichtung 5 wird über ein Steuersignal der ECU 3 aktiviert, z.B. zu einem bestimmten Zeitpunkt nach der Aktivierung des Gasgenerators 23. Denkbar ist allerdings auch, dass die Druckreduzierungsvorrichtung 5 (alternativ oder zusätzlich zur ECU-Steuerung) selbststeuernd (z.B. als selbstadaptive Abströmöffnung) ausgebildet ist. Die Druckreduzierungsvorrichtung 5 weist eine Ausströmöffnung 51 des Gassacks 22 auf, die vor dem Aktivieren der Druckreduzierungsvorrichtung 5 über eine Abdeckvorrichtung (in Fig. 1 nicht dargestellt, vgl. Fig. 4A-C) verschlossen ist. Durch Aktivieren der Druckreduzierungsvorrichtung 5 wird die Abdeckvorrichtung relativ zur Ausströmöffnung 51 bewegt, so dass die Ausströmöffnung 51 freigegeben wird und Gas aus dem Gassack 22 abströmen kann (Pfeil A in Fig. 2).

Den Zustand des Gassacks 22 zu einem Zeitpunkt nach Aktivieren der Druckreduzierungsvorrichtung 5 zeigt Fig. 2. Nach Unterschreiten eines (insbesondere durch die Auslegung der Rückholmechanik 62) vorgebbaren Innendruckes kann der Gassack 22 die von der Rückholmechanik 62 auf den Gassack 22 ausgeübte Rückstellkraft nicht mehr kompensieren, so dass die Rückholmechanik 62 den Gassack 22 (z.B. entgegen der Entfaltungsrichtung) aus dem Sichtfeld des Fahrers zieht (d.h. die Rückholmechanik 62 wird bei Unterschreiten des vorgebbaren Innendruckes automatisch aktiv).

Fig. 3 zeigt in Explosionsdarstellung im Detail eine Variante einer in einem zweiteiligen Gehäuse untergebrachten Rückholmechanik 62 der Rückholeinrichtung 6. Danach weist die Rückholmechanik 62 eine Aufwickeleinrichtung in Form einer in einem ersten Gehäuseteil 6211 angeordneten Aufwickelspule 621 auf, an der das zweite Ende 612 des Rückholbandes 61 festgelegt ist. Die Aufwickelspule 621 wirkt über eine Welle 613 mit einer Spiralfeder 614 zusammen, wobei ein innenliegendes Ende 6141 der Spiralfeder 614 in einen Endbereich (Schlitz 6131) der Welle 613 eingreift. Die Spiralfeder 614 ist einem zweiten Gehäuseteil 6212 untergebracht, wobei das zweite Gehäuseteil 6212 an einem Flanschbereich 6213 des ersten Gehäuseteils 6211 festgelegt ist.

Die Welle 613 ist mit ihrem anderen, gegenüberliegenden Ende 6132 drehfest mit der Aufwickelspule 621 verbunden. Bei der Entfaltung des Gassackes 22 wird das Rückholband 61 von der Aufwickelspule 621 abgewickelt. Die resultierende Drehbewegung der Aufwickelspule 621 wird über die Welle 613 an die Spiralfeder 614 (an deren innenliegendes Ende 6141) weitergeleitet, wodurch diese aufgewickelt und damit gespannt wird. Mit zunehmender Abwickellänge des Rückholbandes 61 steigt so die auf den Gassack 22 ausgeübte Rückstellkraft.

Die Figuren 4A bis 4B betreffen eine Variante der Druckreduzierungsvorrichtung 5, wobei die Fig. 4A und 4C verschiedene Schnittdarstellungen und Fig. 4B eine Draufsicht auf die Druckreduzierungsvorrichtung 5 zeigen.

Die Fig. 4A und Fig. 4B stellen die Ausgangssituation dar, d.h. den Zustand des Gassacks 22 und der Druckreduzierungsvorrichtung 5 vor Aktivierung der Druckreduzierungsvorrichtung 5. Der Gassack 22 wurde jedoch bereits mit dem nach Zündung des Gasgenerators 23 durch diesen freigesetzten Gas befüllt und hat sich aus dem Modulgehäuse 21 heraus entlang der Frontscheibe entfaltet.

Die Druckreduzierungsvorrichtung 5 umfasst eine Ausströmöffnung 51 des Gassacks 22, die von einem Abschnitt (Abdeckteil 521) einer Abdeckvorrichtung in Form eines sich kanalartig entlang des aufgeblasenen Gassacks 22 erstreckenden, aufblasbaren Elementes 52 verschlossen wird. Entlang des die Ausströmöffnung 51 umgebenden Randbereichs des Gassacks 22 ist das aufblasbare Element 52 mittels mindestens einer lösbaren Verbindung 53 (z.B. in Form mindestens einer Reißnaht) mit dem Gassack 22 verbunden. Beispielsweise umläuft die Verbindung 53 die Ausströmöffnung 51. Zusätzlich kann mindestens eine feste Verbindung 55 zwischen dem aufblasbaren Element 52 und dem Gassack 22 vorgesehen sein. Mit seinem dem Abdeckteil 521 abgewandten Ende 522 ist das aufblasbare Element 52 fahrzeugfest (z.B. am Modulgehäuse 21) festgelegt.

Die Druckreduzierungsvorrichtung 5 weist des Weiteren eine Gasbereitstellungseinrichtung in Form einer von dem Gasgenerator 23 verschiedenen (insbesondere pyrotechnischen) Gasquelle 54 zum Aufblasen des aufblasbaren Elementes 52 auf. Das aufblasbare Element ist entsprechend so am Fahrzeug angeordnet, dass die Gasquelle 54 in Strömungsverbindung mit einem aufblasbaren Volumen des aufblasbaren Elementes 52 steht. Das aufblasbare Volumen des aufblasbaren Elementes 52 ist insbesondere durch zwei fest miteinander verbundene (insbesondere einander gegenüberliegende) Verbindungsbereiche zweier Materiallagen (z.B. aus einem Gassackmaterial) begrenzt. Die Materiallagen sind insbesondere über eine Naht 56 miteinander verbunden, wobei die Naht 56, die mit einem oberen Abschnitt ebenfalls die Ausströmöffnung 51 umläuft, das aufblasbare Volumen des aufblasbaren Elementes 52 begrenzt. Geeignete Ausgestaltungen des aufblasbaren Elementes sind in der deutschen Patentanmeldung DE 10 2010 039 895 beschrieben, auf die insofern Bezug genommen wird.

Fig. 4C zeigt die Situation nach Aktivieren der Druckreduzierungsvorrichtung 5, d.h. nach Auslösen der Gasquelle 54. Die durch Einwirkung des sich durch das Befüllen mit Gas der Gasquelle 54 im aufblasbaren Element 52 aufbauenden Druckes und z.B. auch durch die hohe Temperatur der einströmenden Gase hervorgerufene Belastung der Verbindungen 53 führt schließlich zu ihrer Zerstörung, so dass sich das aufblasbare Element 52 zumindest im Bereich der Ausströmöffnung 51 von dem Gassack 22 wegbewegt und somit die Ausströmöffnung 51 freigibt. Daraufhin strömt Gas aus dem Inneren des Gassacks 22 nach außen ab, was eine Reduzierung des Gassackinnendrucks bewirkt.

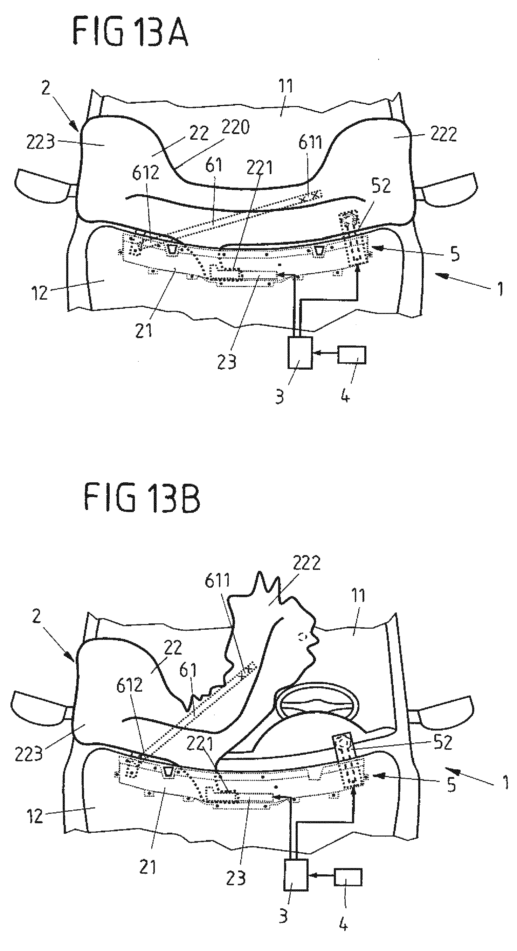

Gemäß Fig. 4C bleibt die Verbindung zwischen dem aufblasbaren Element 52 und dem Gassack 22 über die zusätzliche feste Verbindung 55 auch nach dem Aktivieren der Gasquelle 54 bestehen. Es ist jedoch auch denkbar, dass auch die Verbindung 55 als lösbar (insbesondere ebenfalls als Reißverbindung) ausgebildet ist, so dass sich der Gassack 22 großflächiger (z.B. komplett von dem aufblasbaren Element 52) löst (vgl. auch das Ausführungsbeispiel der Fig. 13A und B).

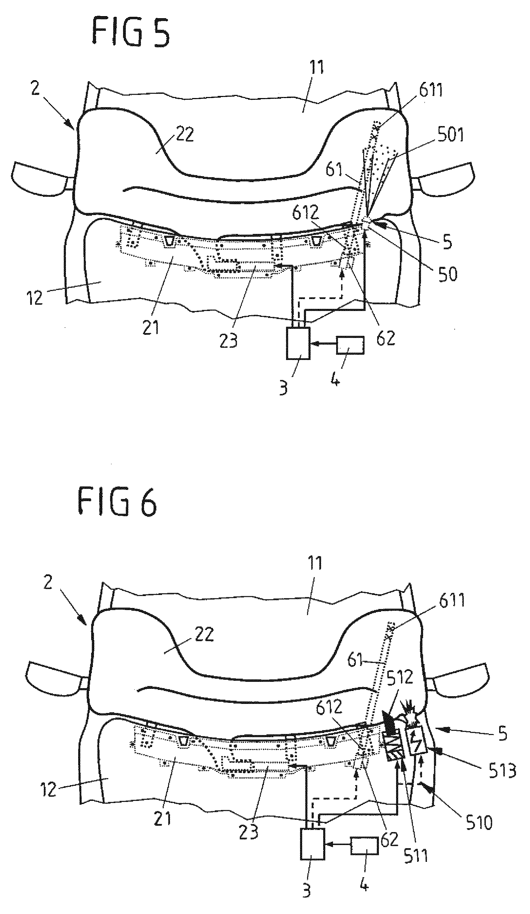

Figur 5 stellt ein weiteres Ausführungsbeispiel der erfindungsgemäßen Gassackanordnung dar, die ähnlich dem ersten Ausführungsbeispiel ausgeführt ist. Allerdings ist die Druckreduzierungseinrichtung 5 hier nicht durch eine Kombination aus einer Ausströmöffnung und einer Abdeckvorrichtung ausgebildet, sondern die Druckreduzierungsvorrichtung weist eine Kühlmittelbereitstellungseinrichtung in Form einer Kühlvorrichtung 50 auf, wobei die Kühlvorrichtung 50 nach Aktivieren ein Kühlmittel 501 in den aufgeblasenen Gassack 22 einsprüht. Beispielsweise ragt die Kühlvorrichtung 50 mit einem Kühlmittelaustrittsbereich durch eine Öffnung in den Gassack 22 hinein. Durch das in den Gassack 22 eingesprühte Kühlmittel 501 wird die Temperatur der im Gassack 22 befindlichen Gase und damit der Gassackinnendruck schlagartig abgesenkt.

Die Kühlvorrichtung 50 wird separat über die ECU 3 gesteuert, d.h. auf ein Steuersignal der ECU 3 hin ausgelöst, wie bereits oben in Zusammenhang mit dem ersten Ausführungsbeispiel erläutert.

Figur 6 bezieht sich auf ein weiteres Ausführungsbeispiel der Gassackanordnung, die sich von den vorherigen Beispielen nur durch die Ausgestaltung der Druckreduzierungseinrichtung 5 unterscheidet. Danach umfasst Druckreduzierungsvorrichtung 5 eine Ausströmöffnungserzeugungseinrichtung 510, die ein mit einem Aktuator in Form einer Feder 511 zusammenwirkendes Werkzeug nach Art einer Klinge 512 und/oder eine pyrotechnische Einheit 513 umfasst. Die Klinge 512 wird nach Aktivieren der Ausströmöffnungserzeugungseinrichtung 510 durch Entspannen der Feder 511 in mechanischen Kontakt mit dem Gassack 22 (der Gassackhülle) gebracht, wodurch die Gassackhülle lokal aufgetrennt und auf diese Weise eine Ausströmöffnung in dem Gassack erzeugt wird. Des Weiteren setzt die pyrotechnische Einheit 513 nach Aktivieren der Ausströmöffnungserzeugungseinrichtung 510 heiße Gase frei, die auf die Gassackhülle des Gassacks 22 einwirken, wodurch ebenfalls eine Ausströmöffnung in dem Gassack erzeugt wird.

Die Feder-Klingen-Kombination 511, 512 bzw. die pyrotechnische Einheit 513 werden über die ECU 3 angesteuert, wie oben in Zusammenhang mit den anderen Ausführungsbeispielen erläutert. Die Feder-Klingen-Kombination 511, 512 bzw. die pyrotechnische Einheit 513 können sowohl fest mit dem Fahrzeug als auch an dem Gassack 22 (z.B. auf dessen Gassackhülle) angeordnet sein. Selbstverständlich kann auch nur die Feder-Klingen-Kombination 511, 512 oder nur die pyrotechnische Einheit 513 verwendet werden.

Es sei erwähnt, dass die Druckreduzierungseinrichtungen der Figuren 4A-C, 5 und 6 natürlich auch in Kombination miteinander verwendet werden können.

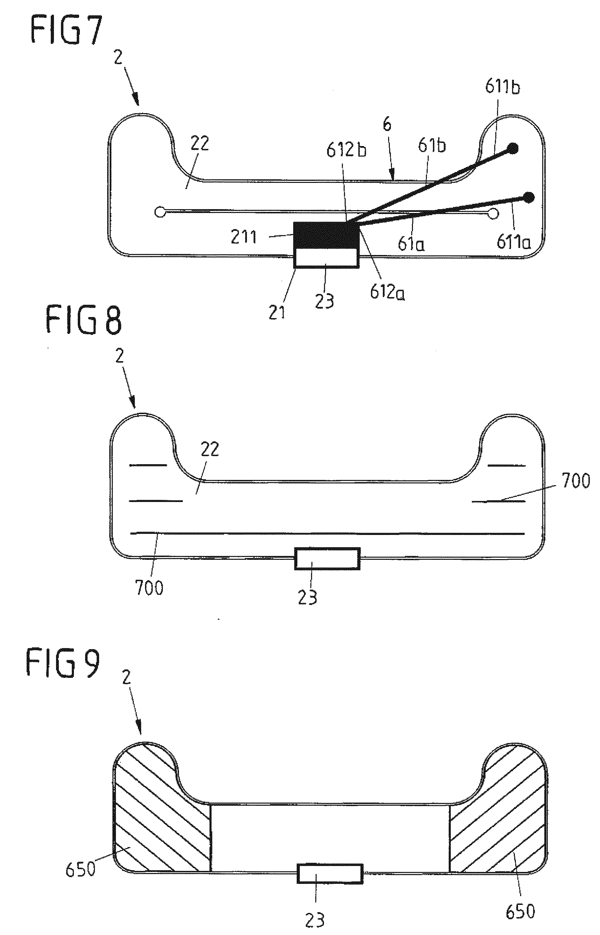

Die Figuren 7 bis 15 betreffen unterschiedliche Ausgestaltungen der Rückholeinrichtung 6 der erfindungsgemäßen (jeweils in Schnittansicht schematisch dargestellten) Gassackanordnung 2, wobei die gezeigten Gassackanordnungen insbesondere jeweils auch eine Druckreduzierungseinrichtung aufweisen, auch wenn eine solche nicht in jeder der Figuren 7 bis 15 dargestellt ist.

Gemäß Figur 7 umfasst die Rückholeinrichtung 6 zwei (z.B. elastische) Rückholbänder 61 a, 61 b, die jeweils mit einem Ende 611 a, 611 b mit dem Gassack 22 (insbesondere auf der Fahrerseite) verbunden sind. Das jeweilige andere Ende 612a, 612b ist an einem elastisch ausgebildeten Bereich 211 des Gassackmodulgehäuses 21 festgelegt, wobei der Bereich 211 z.B. eine Modulkappe des Modulgehäuses 21 ist, die einer Abdeckung, z.B. einer Motorhaube, des Fahrzeugs zugewandt ist. Selbstverständlich kann auch nur ein Rückholband oder mehr als zwei Rückholbänder verwendet werden. Denkbar ist auch, dass die Enden 612a, 612b der Rückholbänder 61 a, 61 b jeweils an einem anderen elastischen Abschnitt oder Element der Gassackanordnung festgelegt sind, z.B. an einem in einem Scharnierbereich elastisch gelagerten Element.

Bei Entfalten des Gassacks 22 werden die Rückholbänder 61 a, 61 b gedehnt und ziehen sich nach Abbau des Gassackinnendruckes zurückt, wobei sie einen Teil des Gassacks 22 mitnehmen und aus dem Sichtfeld des Fahrers bewegen, wie im Prinzip bereits weiter oben erläutert.

Fig. 8 illustriert, dass der Gassack 22 mit Nähten in Form von Abnähern 700 versehen werden kann, die insbesondere zwei Gassacklagen des Gassacks 22 miteinander verbinden. Insbesondere über die Position, die Anzahl und den Verlauf der Abnäher 700 kann dem Gassack 22 eine bestimmt Form gegeben werden, die er nach Entfaltung und dem anschließenden Druckabbau einnimmt.

Gemäß Fig. 9 sind bestimmte Bereiche 650 des Gassacks 22 mit einem thermisch aktivierbaren und kontraktionsfähigen Material (z.B. in Form eines Gewebes) versehen bzw. bestehen aus diesem. Auch mit Hilfe der thermisch aktivierbaren Bereiche 650 kann dem Gassack eine bestimmt Form aufgezwungen werden, die er nach Entfaltung und anschließendem Druckabbau einnehmen soll.

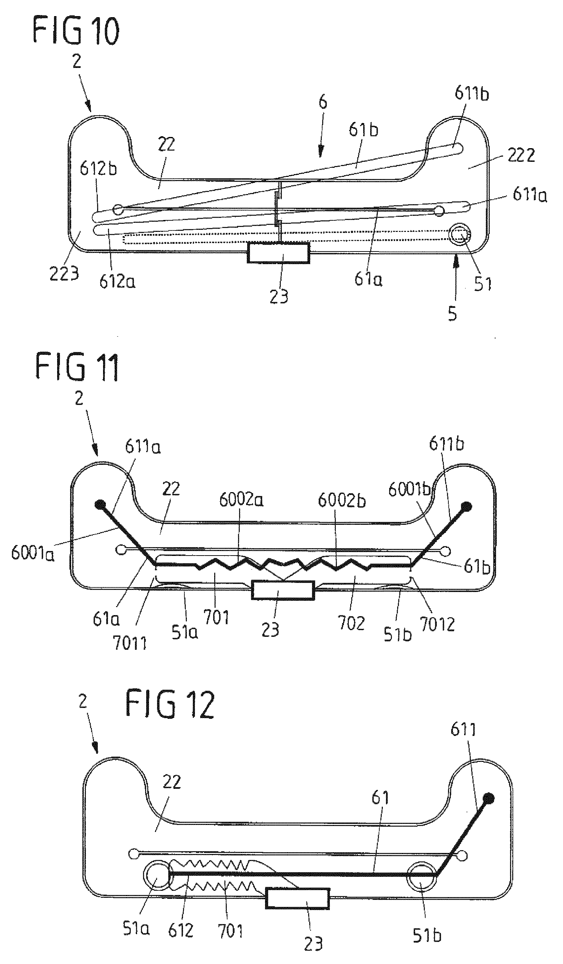

Die Ausgestaltung der Rückholeinrichtung 6 gemäß Fig. 10 umfasst zwei Rückholbänder 61 a, 61 b, die jeweils mit ihren ersten und zweiten Enden 611 a, 611 b, 612a, 612b an dem Gassack 22 festegelegt sind, wobei die Rückholbänder 61 a, 61 b nahezu über die gesamte Breite (in Fahrzeugquerrichtung gemessen) des Gassackes 22 verlaufen. Beispielsweise weist der Gassack 22 einen sich auf der Fahrerseite erstreckenden ersten Teilbereich 222 auf, mit dem die ersten Enden 611 a, 611b der Rückholbänder 61 a, 61 b verbunden sind.

Die zweiten Enden 612a, 612b sind mit einem zweiten, sich auf der Beifahrerseite erstreckenden Teilbereich 223 verbunden, dessen Innendruck im Unterschied zum Innendruck im ersten Teilbereich 222 zumindest im Wesentlichen nicht mittels der Druckreduzierungsvorrichtung 5 absenkbar ist. Somit bleibt der zweite Teilbereich 223 auch nach Aktivieren der Druckreduzierungsvorrichtung 5 in Position, so dass die ersten Enden 611 a, 611 b der Rückholbänder 61 a, 61 b und damit der erste Teilbereich 222 des Gassack 22 in Richtung auf die zweiten Enden 612a, 612b der Rückholbänder 61 a, 61 b gezogen werden und der erste Teilbereich 222 somit aus dem Sichtbereich des Fahrers weg bewegt wird. Beispielsweise bewirken die Rückholbänder 61 a, 61 b ein Umklappen des fahrerseitigen ersten Bereichs 222 des Gassacks 22.

Die Druckreduzierungsvorrichtung 5 des in Fig. 10 gezeigten Gassacks 22 umfasst zudem eine Ausströmöffnung 51, die im ersten Teilbereich 222 des Gassacks 22 positioniert ist, d.h. der Abstand der Ausströmöffnung 51 zu den ersten Enden 611 a, 611 b der Rückholbänder 61 a, 61 b ist kleiner als zu den zweiten Enden 612a, 612b der Rückholbänder 61 a, 61 b. Die Ausströmöffnung 51 wird z.B. - wie oben erläutert - aktiv über eine ECU freigegeben oder kann auch passiv ausgeführt sein, wobei eine Freigabe z.B. in Abhängigkeit von dem Grad der Entfaltung des Gassacks erfolgen kann. Denkbar ist auch, dass eines der Rückholbänder 61 a, 61 b die Ausströmöffnung 51 zunächst verschließt und bei vollständiger Entfaltung des Gassacks 22 freigibt.

Nach Figur 11 weist die Rückholeinrichtung 6 der Gassackanordnung 2 wiederum zwei Rückholbänder 61 a, 61 b auf, die jeweils mit einem Ende 611 a, 611 b an dem Gassack 22 festgelegt sind. Darüber hinaus sind im Innern des Gassacks 22 zwei Straffschläuche 701, 702 angeordnet, und zwar so, dass sie jeweils mit einem Ende unmittelbar mit einem Ausströmbereich des Gasgenerators 23 verbunden sind, so dass Gas des Gasgenerators über die Straffschläuche 701, 702 (und eine jeweils, z.B. in einem dem Gasgenerator 23 abgewandten Ende vorgesehene Abströmöffnung 7011, 7012) in den Gassack 22 einströmen kann. Des Weiteren überdecken die Straffschläuche 701, 702 nach Entfaltung des Gassacks 22 zunächst zwei Ausströmöffnungen 51 a, 51 b des Gassacks 22.

Die Rückholbänder 61 a, 61 b weisen jeweils einen (z.B. nicht elastisch ausgebildeten) ersten Abschnitt 6001 a, 6001 b und einen zweiten, elastisch ausgebildeten Abschnitt 6002a, 6002b auf, die im Innern der Straffschläuche 701, 702 verlaufen und mit dem jeweiligen Straffschlauch 701, 702 verbunden (z.B. vernäht) sind. Beim Entfalten des Gassacks 22 werden die Straffschläuche 701, 702 und damit die zweiten Abschnitte 6002a, 6002b der Rückholbänder 61 a, 61 b gedehnt. Gleichzeitig überdecken dabei Straffschläuche 701, 702 die Ausströmöffnungen 51 a, 51 b.

Baut sich der Druck im Gassack 22 ab, zieht der zweite, elastische Abschnitt 6002a, 6002b der Rückholbänder 61 a, 61 b die Straffschläuche 701, 702 zusammen, so dass die Ausströmöffnungen 51 a, 51 b wieder freigegeben werden, wodurch sich der Druckabbau im Gassack 22 beschleunigt. Über die ersten Abschnitte 6001 a, 6001 b der Rückholbänder 61 a, 61 b wird gleichzeitig der Gassack 22 zumindest abschnittsweise verlagert (insbesondere aus dem Sichtbereich des Fahrers hinaus). Denkbar ist auch, dass die die Rückholbänder 61 a, 61 b einstückig miteinander verbunden sind.

Im Ausführungsbeispiel der Figur 12 ist nur ein (insbesondere nicht elastisch ausgebildetes) Rückholband 61 vorhanden, wobei dessen eines Ende 611 wiederum mit dem Gassack 22 verbunden ist. Das Rückholband 61 ist zudem durch einen im Gassackinneren angeordneten Straffschlauch 701 hindurchgeführt und über sein anderes Ende 612 mit diesem verbunden.

Darüber hinaus weist der Gasgenerator 23 zwei Stufen auf, die nacheinander aktivierbar sind. Die erste Stufe des Gasgenerators dient zum Aufblasen des Gassacks 22, um diesen in seine Schutzposition zu bringen. Die zweite Stufe dient zum Befüllen des Straffschlauches 701, der entsprechend so in Bezug zum Gasgenerator 23 angeordnet ist, dass er mit Gas der zweiten Stufe des Gasgenerators 23 befüllbar ist. Durch Befüllen des Straffschlauches 701 streckt sich dieser und spannt damit das mit ihm verbundene Rückholband 61 derart, dass der mit dem Ende 611 des Rückholbandes 61 verbundene Teilbereich des Gassacks 22 aus einem Sichtfeld eines Fahrzeuginsassen entfernt wird.

Zudem kann der Gassack 22 Ausströmöffnungen 51 a, 51 b aufweisen, die mit dem Straffschlauch 701 und/oder dem Rückholband 61 so zusammenwirken, dass sie zunächst verschlossen sind und nach Zünden der zweiten Gasgeneratorstufe freigegeben werden. Beispielsweise sind die Ausströmöffnungen 51 a, 51 b jeweils mit einer Abdeckvorrichtung (z.B. ein Verschlusselement in Form eines Materialstücks) verschlossen, wobei die Abdeckvorrichtung mit dem Straffschlauch 701 und/oder dem Rückholband 61 verbunden ist, so dass die Abdeckvorrichtung bei Straffung des Straffschlauch 701 und/oder dem Rückholband 61 von der jeweils zugeordneten Ausströmöffnung 51 a, 51 b weg bewegt wird. Beispielsweise ist die Abdeckvorrichtung jeweils zunächst am Gassack 22 befestigt und wird unter Einwirkung des sich straffenden Straffschlauches 701 bzw. Rückholbandes 61 vom Gassack 22 abgelöst.

Die Figuren 13A und 13B beziehen sich auf ein weiteres Ausführungsbeispiel der Erfindung, wobei die Gassackanordnung 1 ähnlich dem Ausführungsbeispiel der Figuren 4A und 4C eine Druckreduzierungsvorrichtung 5 mit einem aufblasbaren Element 52, das mit einem ersten Endabschnitt mit einem fahrerseitigen (ersten) Bereich 222 des Gassacks 22 und mit einem zweiten Endabschnitt mit dem Fahrzeug (z.B. über das Modulgehäuse 21) verbunden ist. Das aufblasbare Element 52 überdeckt vor Aktivieren der Druckreduzierungsvorrichtung 5 eine Ausströmöffnung des Gassacks 22, löst sich jedoch nach Aktivieren der Druckreduzierungsvorrichtung 5, so dass die Ausströmöffnung freigegeben wird, wie in Zusammenhang mit den Figuren 4A bis 4C beschrieben.

Im Unterschied zu den Figuren 4A bis 4C löst sich der Gassack 22 (im Bereich seines ersten Bereichs 222) jedoch nach Aktivieren der Druckreduzierungsvorrichtung 5 komplett von dem aufblasbaren Element 52. Unter Einwirkung eines (insbesondere elastischen) Rückholbandes 61, das mit einem ersten Ende 611 mit dem fahrerseitigen Bereich 222 des Gassacks 22 und mit einem zweiten Ende 612 auf der Beifahrerseite mit dem Fahrzeug verbunden ist, bewegt sich der fahrerseitige Bereich 222 des Gassacks 22 dadurch aus dem Sichtfeld des Fahrers (Fig. 13B). Insbesondere schwenkt der abgelöste fahrerseitige Bereich 222 des Gassacks 22 um einen Punkt, an dem der Gassack 22 mit dem Fahrzeug verbunden ist, z.B. um eine Verbindungsstelle, an der ein Einblasmund des Gassacks 22 mit dem Fahrzeug 1 oder mit einem fest mit dem Fahrzeug verbundenen Teil (z.B. dem Gasgenerator) verbunden ist.

Die Schwenkbewegung des fahrseitigen Bereichs 222 des Gassacks 22 kann dadurch unterstützt werden, dass der Gassack 22 in seinem mittleren Bereich, d.h. zwischen seinem ersten und seinem zweiten Bereich 222, 223, eine Einbuchtung 220 aufweist, d.h. einen Bereich in dem die Höhenausdehnung des Gassacks 22 im Vergleich zum ersten und zweiten Bereich 222, 223 reduziert ist. Insbesondere sind die sich seitlich neben der Einbuchtung 220 erstreckenden Bereiche des Gassackss 22 so ausgebildet, dass sie jeweils einen Teil der A-Säule des Fahrzeugs abdecken.

Die Schwenkbewegung des Gassacks 22 aus dem Sichtfeld des Fahrers heraus kann natürlich alternativ oder zusätzlich durch eine anderen, zuvor beschriebene Rückholeinrichtung (z.B. gemäß den Fig. 7 oder 10 bis 12) erzeugt werden. Denkbar ist auch, dass die Schwenkbewegung des Gassacks 22 ausschließlich durch einen Rückstoß auf den Gassack, der auf das Ausströmen von Gas aus der freigegeben Ausströmöffnung zurückgeht, und/oder den Fahrtwind hervorgerufen wird. Des Weiteren kann anstelle eines aufblasbaren Elementes 52 eine andere Abdeckvorrichtung (z.B. ein Fangband) verwendet werden.

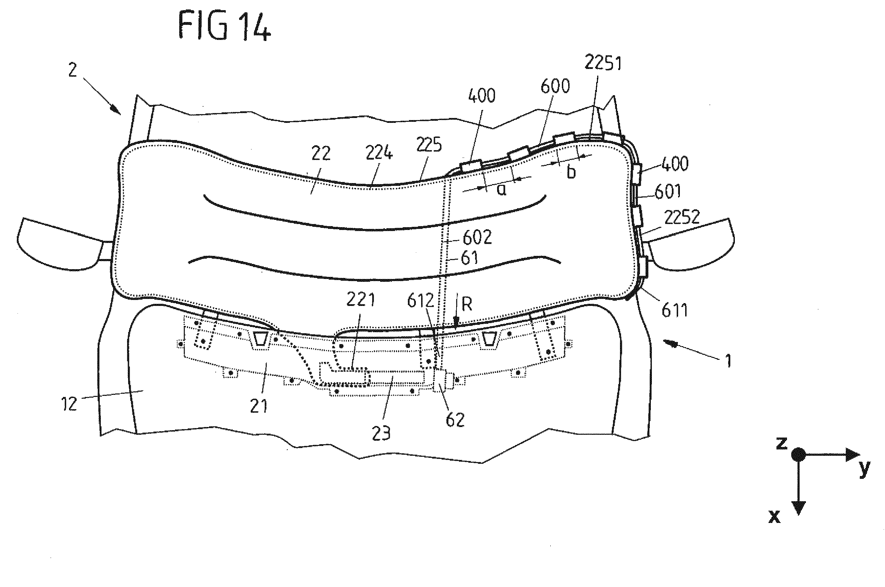

Figur 14 betrifft eine weitere Ausgestaltung des als Rückholband 61 ausgestalteten Verbindungselementes. Zwar ist das zweite Ende 612 des Rückholbandes 61 wie in Fig. 1 über die Rückholmechanik 62 mit dem Fahrzeug verbunden. Im Unterschied zur Fig. 1 ist das erste Ende 611 des Rückholbandes 61 jedoch nicht an einer parallel zu einer der Frontscheibe 11 verlaufenden (flächigen) Seite des Gassacks 22 festgelegt.

Vielmehr verläuft ein Teil des Rückholbandes 61 entlang eines äußeren Randes 225 (d.h. entlang einer Umfangsnaht 224) des Gassacks 22, wobei sich ein Teilabschnitt 600 des Rückholbandes 61 entlang eines oberen Abschnittes 2251 des Gassackrandes 225 und ein anderer Teilabschnitt 601 des Rückholbandes 61 entlang eines seitlichen Abschnitts 2252 des Gassackrandes 225 erstreckt. Bei dem oberen Abschnitt 2251 des Gassackrandes 225 handelt es sich um denjenigen der beiden sich parallel zu einer durch die Fahrzeugquer- und Fahrzeughöhenrichtung aufgespannten Ebene erstreckenden Randabschnitte des Gassacks 22, der am weitesten von der Motorhaube 12 entfernt ist. Der seitliche Abschnitt 2252 verläuft im Bereich der Fahrerseite des Fahrzeugs und erstreckt sich insbesondere parallel zu einer durch die Fahrzeuglängs- und Fahrzeughöhenrichtung aufgespannten und durch die A-Säule des Fahrzeugs hindurch verlaufenden Ebene.

Das sich an den Teilabschnitt 601 anschließende (erste) Ende 611 des Rückholbandes 61 ist an dem Gassack 22 in dessen seitlichen Randabschnitt 2252 oder an einem unteren Randabschnitt des Gassacks 22 festgelegt. Ein sich zwischen der Rückholmechanik 62 und dem Teilabschnitt 600 des Rückholbandes 61 erstreckender Abschnitt 602 des Rückholbandes 61 verläuft in einem bezogen auf die Fahrzeugquerrichtung mittleren Bereich des Gassacks 22 und im Wesentlichen quer zur Ausdehnung des Gassacks 22 in Fahrzeugquerrichtung, wobei sich der Teilabschnitt 600 des Rückholbandes 61 abgewinkelt (bzw. abgekrümmt) dem Abschnitt 602 anschließt; z.B. verlaufen die Teilabschnitte 600 und 602 nahezu senkrecht zueinander.

Die entlang der Randabschnitte 2251, 2252 des Gassacks 22 verlaufenden Abschnitte 600, 601 des Rückholbandes 61 sind mittels einer aus einer Mehrzahl von Schlaufen 400 gebildeten Führungsvorrichtung geführt. Die Schlaufen 400 sind zueinander beabstandet angeordnet, wobei sie z.B. einen konstanten Abstand a voneinander aufweisen. Beispielsweise beträgt der Abstand a 50 bis 100 mm, insbesondere ca. 75 mm. Die Breite b der Schlaufen beträgt z.B. maximal 30 mm, z.B. zwischen 10 bis 30 mm, insbesondere ca. 25 mm, wobei insbesondere zwischen 10 und 20 Schlaufen vorgesehen sind. Selbstverständlich ist es nicht zwingend, dass die Schlaufen 400 in konstanten Abständen zueinander angeordnet sind. Möglich ist zudem auch, dass die Schlaufen 400 nicht identische, sondern unterschiedliche Breiten besitzen.

Insbesondere ist die Breite der Schlaufen so bemessen, dass sie beim Einholen (Rückholen) des Rückholbandes 61 (in Rückholrichtung R) aufeinander zu bewegt werden, z.B. bis sie aneinander liegen, so dass der Gassack 22 in Falten gelegt, d.h. die zwischen den Schlaufen 400 befindlichen Gassackbereiche gerafft werden, und der Gassack 22 somit möglichst effizient aus dem Sichtbereich des Fahrzeugführers entfernt wird. Die Länge des Rückholbandes 61 (insbesondere die Länge des von der Rückholmechanik 62 einzuziehenden Abschnitts des Rückholbandes 61) sowie der Abstand a und/oder die Breite b der Schlaufen 400 zueinander sind auf die gewünschte Endposition des Gassackes 22 nach der Rückholung abgestimmt.

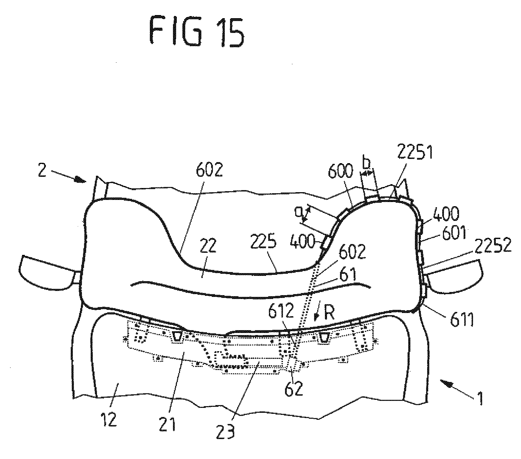

Fig. 15 zeigt eine Abwandlung der Fig. 14, wonach der Gassack 22 im aufgeblasenen Zustand eine in Bezug auf die Fahrzeugquerrichtung mittlere Einbuchtung 220 aufweist.

Wie bereits oben angedeutet, können Elemente der beschriebenen Ausführungsbeispiele natürlich auch in Kombination miteinander verwendet werden. Beispielsweise kann die Konfiguration des Rückholbandes der Fig. 14 und 15 mit den anderen Ausführungsbeispielen kombiniert werden.

### Bezugszeichen

- 1: Kraftfahrzeug
- 2: Gassackanordnung
- 3: ECU
- 4: Sensor
- 5: Druckreduzierungsvorrichtung
- 6: Rückholeinrichtung
- 11: Frontscheibe
- 12: Motorhaube
- 21: Modulgehäuse
- 22: Gassack
- 23: Gasgenerator
- 50: Kühlvorrichtung
- 51, 51 a, 51 b: Ausströmöffnung
- 52: aufblasbares Element
- 53: lösbare Verbindung
- 54: Gasquelle
- 55: feste Verbindung
- 56: Naht
- 61, 61a, 61b: Rückholband
- 62: Rückholmechanik
- 211: Bereich Gassackmodulgehäuse
- 220: Einbuchtung
- 221: Einblasbereich
- 222: erster Teilbereich Gassack
- 223: zweiter Teilbereich Gassack
- 224: Umfangsnaht
- 225: äußerer Rand Gassack
- 501: Kühlmittel
- 510: Ausströmöffnungserzeugungseinrichtung
- 511: Feder
- 512: Klinge
- 513: pyrotechnische Einheit
- 521: Abdeckteil
- 522: Ende aufblasbares Element
- 600, 601, 602: Teilabschnitt Rückholband
- 611, 611a, 611b: erstes Ende
- 612, 612a, 612b: zweites Ende
- 613: Welle
- 614: Spiralfeder
- 621: Aufwickelspule
- 650: thermisch aktivierbarer Bereich
- 700: Abnäher
- 701, 702: Straffschlauch
- 2251: oberer Abschnitt
- 2252: seitlicher Abschnitt
- 6001a, 6001b: erster Abschnitt Rückholband
- 6002a, 6002b: zweiter Abschnitt Rückholband
- 6131: Schlitz
- 6132,6141: Ende
- 6211: erstes Gehäuseteil
- 6212: zweites Gehäuseteil
- 6213: Flanschbereich
- 7011, 7012: Abströmöffnung Straffschlauch

## Patentansprüche

1. Gassackanordnung für ein Kraftfahrzeug, mit
- einem Gassack (22), der zum Schutz einer sich außerhalb des Kraftfahrzeugs (1) befindlichen Person entlang zumindest eines Teilabschnitts der Außenseite der Frontscheibe (11) oder eines sonstigen Abschnitts einer Außenseite des Kraftfahrzeugs (1) entfaltbar ist; und
- mindestens einer Druckreduzierungsvorrichtung (5) zum Reduzieren des Innendruckes zumindest eines Teilbereichs des zumindest teilweise aufgeblasenen Gassacks (22)
**gekennzeichnet durch,**
eine Einrichtung (6) zum Bewegen zumindest eines Teilabschnitts des zumindest teilweise aufgeblasenen Gassacks (22) aus dem Sichtfeld eines Fahrzeuginsassen des Fahrzeugs (1).

2. Gassackanordnung nach Anspruch 1, **dadurch gekennzeichnet, dass** die Druckreduzierungsvorrichtung (5) über eine Steuerungseinrichtung (3) des Fahrzeugs (1) zu einem vorgebbaren Zeitpunkt aktivierbar ist.

3. Gassackanordnung nach einem der vorhergehenden Ansprüche, **dadurch gekennzeichnet, dass** die Druckreduzierungsvorrichtung (5) mindestens eine in dem Gassack (22) vorgesehene Ausströmöffnung (51, 51 a, 51 b) umfasst sowie eine Abdeckvorrichtung, die die Ausströmöffnung (51, 51 a, 51 b) vor dem Aktivieren der Druckreduzierungsvorrichtung (5) zumindest teilweise verschließt und nach dem Aktivieren der Druckreduzierungsvorrichtung (5) weniger verschließt oder vollständig freigibt.

4. Gassackanordnung nach Anspruch 3, **dadurch gekennzeichnet, dass** die Abdeckvorrichtung mindestens ein aufblasbares Element (52) aufweist, das mit dem Gassack (22) so zusammenwirkt, dass es die Ausströmöffnung (51) vor Aktivieren der Druckreduzierungsvorrichtung (5) zumindest teilweise verschließt und nach dem Aktivieren der Druckreduzierungsvorrichtung (5) weniger verschließt oder vollständig freigibt.

5. Gassackanordnung nach Anspruch 4, **dadurch gekennzeichnet, dass** die Druckreduzierungsvorrichtung (5) eine Gasbereitstellungseinrichtung (54) umfasst, die bei Aktivieren der Druckreduzierungsvorrichtung (5) das aufblasbare Element (52) derart aufbläst, dass es sich von dem Gassack (22) löst und die Ausströmöffnung (51) weniger verschließt oder vollständig freigibt.

6. Gassackanordnung nach Anspruch 5, **gekennzeichnet durch** einen Gasgenerator (23) zum Aufblasen des Gassacks (22), wobei die Gasbereitstellungseinrichtung (54) von dem Gasgenerator (23) verschieden ist.

7. Gassackanordnung nach einem der vorhergehenden Ansprüche, **dadurch gekennzeichnet, dass** die Druckreduzierungsvorrichtung (5) eine Kühlmittelbereitstellungseinrichtung (50) zum Erzeugen oder Einbringen eines Kühlmittels (501) in den zumindest teilweise aufgeblasenen Gassack (22) aufweist.

8. Gassackanordnung nach einem der vorhergehenden Ansprüche, **dadurch gekennzeichnet, dass** die Druckreduzierungsvorrichtung (5) eine Ausströmöffnungserzeugungseinrichtung (510) umfasst, die bei Aktivieren der Druckreduzierungsvorrichtung (5) derart thermisch und/oder mechanisch auf den Gassack (22) einwirkt, dass eine Ausströmöffnung in dem Gassack (22) entsteht.

9. Gassackanordnung nach einem der vorhergehenden Ansprüche, **dadurch gekennzeichnet, dass** die Einrichtung (6) zum Bewegen selbststeuernd ausgebildet sind, so dass sie eine Kraft auf den Gassack (22) ausübt, die zumindest einen Teilabschnitt des aufgeblasenen Gassacks (22) aus dem Sichtfeld eines Fahrzeuginsassen bewegt, sobald der Gassackinnendruck unter einen vorgebbaren Wert fällt.

10. Gassackanordnung nach einem der vorhergehenden Ansprüche, **dadurch gekennzeichnet, dass** die Einrichtung (6) zum Bewegen so ausgebildet ist, dass sie über ein Steuersignal einer Steuereinrichtung aktivierbar ist.

11. Gassackanordnung nach einem der vorhergehenden Ansprüche, **dadurch gekennzeichnet, dass** die Einrichtung (6) zum Bewegen mindestens ein Verbindungselement (61, 61 a, 61 b) aufweist, das mit einem ersten Abschnitt (611, 611 a, 611 b) mit dem Gassack (22) verbunden und mit einem zweiten Abschnitt (612, 612a, 612b) ebenfalls mit dem Gassack (22) verbunden oder mit dem Fahrzeug (1) verbindbar ist.

12. Gassackanordnung nach Anspruch 11, **dadurch gekennzeichnet, dass** die Einrichtung (6) zum Bewegen Rückstellkrafterzeugungsmittel (62) zum Erzeugen einer Rückstellkraft auf den zumindest teilweise aufgeblasenen Gassack (22) umfasst, wobei das Verbindungselement (61, 61 a, 61 b) über die Rückstellkrafterzeugungsmittel (62) mit dem Gassack (22) verbunden oder mit dem Fahrzeug (1) verbindbar ist.

13. Gassackanordnung nach Anspruch 12, **dadurch gekennzeichnet, dass** die Rückstellkrafterzeugungsmittel (62) eine mit dem Verbindungselement (61, 61 a, 61 b) zusammenwirkende Feder aufweisen, die sich unter dem beim Entfalten des Gassacks (22) auftretenden Zug des Verbindungselementes (61, 61 a, 61 b) spannt.

14. Gassackanordnung nach Anspruch 12 oder 13, **dadurch gekennzeichnet, dass** die Rückstellkrafterzeugungsmittel (62) eine Aufwickeleinrichtung (621) zum Aufwickeln des Verbindungselementes (61, 61 a, 61 b) aufweisen, wobei die Aufwickeleinrichtung über eine Welle (613) mit der als Spiralfeder (614) ausgebildeten Feder zusammenwirkt.

15. Gassackanordnung nach einem der vorhergehenden Ansprüche, **dadurch gekennzeichnet, dass** der Gassack (22) einen ersten und einen zweiten Teilbereich (222, 223) aufweist, wobei die Druckreduzierungsvorrichtung (5) so ausgebildet und angeordnet ist, dass der Druckabfall nach Aktivieren der Druckreduzierungsvorrichtung (5) im ersten Teilbereich (222) größer ist als im zweiten Teilbereich (223).

## Claims

1. A gas bag arrangement for a motor vehicle, comprising
- a gas bag (22) which can be deployed for the protection of a person present outside the motor vehicle (1) along at least a section of the outside of the windshield (11) or another portion of an outside of the motor vehicle (1); and
- at least one pressure reducing device (5) for reducing the internal pressure at least of a partial region of the at least partly inflated gas bag (22),
**characterized by**
a means (6) for moving at least a section of the at least partly inflated gas bag (22) out of the field of view of a vehicle occupant of the vehicle (1).

2. The gas bag arrangement according to claim 1, **characterized in that** the pressure reducing device (5) can be activated at a specifiable point in time via a control means (3) of the vehicle (1).

3. The gas bag arrangement according to any of the preceding claims, **characterized in that** the pressure reducing device (5) comprises at least one outflow opening (51, 51a, 51 b) provided in the gas bag (22) as well as a covering device which at least partly closes the outflow opening (51, 51a, 51 b) before activating the pressure reducing device (5) and closes the same less or clears the same completely after activating the pressure reducing device (5).

4. The gas bag arrangement according to claim 3, **characterized in that** the covering device includes at least one inflatable element (52) which cooperates with the gas bag (22) such that it at least partly closes the outflow opening (51) before activating the pressure reducing device (5) and closes the same less or clears the same completely after activating the pressure reducing device (5).

5. The gas bag arrangement according to claim 4, **characterized in that** the pressure reducing device (5) comprises a gas providing means (54) which on activation of the pressure reducing device (5) inflates the inflatable element (52) such that it is detached from the gas bag (22) and closes the outflow opening (51) less or clears the same completely.

6. The gas bag arrangement according to claim 5, **characterized by** a gas generator (23) for inflating the gas bag (22), wherein the gas providing means (54) is different from the gas generator (23).

7. The gas bag arrangement according to any of the preceding claims, **characterized in that** the pressure reducing device (5) includes a coolant providing means (50) for producing or introducing a coolant (501) into the at least partly inflated gas bag (22).

8. The gas bag arrangement according to any of the preceding claims, **characterized in that** the pressure reducing device (5) comprises an outflow opening generating means (510) which on activation of the pressure reducing device (5) thermally and/or mechanically acts on the gas bag (22) such that an outflow opening is obtained in the gas bag (22).

9. The gas bag arrangement according to any of the preceding claims, **characterized in that** the means (6) for moving is formed to be self-controlling, so that it exerts a force on the gas bag (22) which moves at least a section of the inflated gas bag (22) out of the field of view of a vehicle occupant, as soon as the gas bag internal pressure falls below a specifiable value.

10. The gas bag arrangement according to any of the preceding claims, **characterized in that** the means (6) for moving is formed such that it can be activated via a control signal of a control means.

11. The gas bag arrangement according to any of the preceding claims, **characterized in that** the means (6) for moving includes at least one connecting element (61, 61 a, 61 b) which with a first portion (611, 611 a, 611 b) is connected with the gas bag (22) and with a second portion (612, 612a, 612b) likewise is connected with the gas bag (22) or connectable with the vehicle (1).

12. The gas bag arrangement according to claim 11, **characterized in that** the means (6) for moving comprises restoring force generating means (62) for generating a restoring force on the at least partly inflated gas bag (22), wherein the connecting element (61, 61 a, 61 b) is connected with the gas bag (22) or connectable with the vehicle (1) via the restoring force generating means (62).

13. The gas bag arrangement according to claim 12, **characterized in that** the restoring force generating means (62) include a spring cooperating with the connecting element (61, 61a, 61b), which is tensioned under the pull of the connecting element (61, 61 a, 61 b) occurring on deployment of the gas bag (22).

14. The gas bag arrangement according to claim 12 or 13, **characterized in that** the restoring force generating means (62) include a winding means (621) for winding up the connecting element (61, 61a, 61b), wherein the winding means cooperates with the spring formed as spiral spring (614) via a shaft (613).

15. The gas bag arrangement according to any of the preceding claims, **characterized in that** the gas bag (22) includes a first and a second partial region (222, 223), wherein the pressure reducing device (5) is formed and arranged such that the pressure drop after activating the pressure reducing device (5) is larger in the first partial region (222) than in the second partial region (223).

## Revendications

1. Agencement de sac à gaz pour un véhicule automobile avec
- un sac à gaz (22) qui peut être déplié pour la protection d'une personne se trouvant en dehors du véhicule automobile (1) le long au moins d'une section partielle du côté extérieur du pare-brise (11) ou d'une autre section d'un côté extérieur du véhicule automobile (1) ; et
- au moins un dispositif de réduction de pression (5) pour la réduction de la pression interne au moins d'une zone partielle du sac à gaz (22) au moins en partie gonflé,
**caractérisé par**
un dispositif (6) pour le déplacement au moins d'une section partielle du sac à gaz (22) gonflé au moins en partie hors du champ de vision d'un occupant de véhicule du véhicule (1).

2. Agencement de sac à gaz selon la revendication 1, **caractérisé en ce que** le dispositif de réduction de pression (5) peut être activé par un dispositif de commande (3) du véhicule (1) à un moment prescriptible.

3. Agencement de sac à gaz selon l'une quelconque des revendications précédentes, **caractérisé en ce que** le dispositif de réduction de pression (5) comporte au moins une ouverture de sortie (51, 51a, 51b) prévue dans le sac à gaz (22) ainsi qu'un dispositif de recouvrement qui ferme au moins en partie l'ouverture de sortie (51, 51a, 51b) avant l'activation du dispositif de réduction de pression (5) et la ferme moins ou la libère complètement après l'activation du dispositif de réduction de pression (5).

4. Agencement de sac à gaz selon la revendication 3, **caractérisé en ce que** le dispositif de recouvrement présente au moins un élément gonflable (52) qui coagit avec le sac à gaz (22) de sorte qu'il ferme au moins en partie l'ouverture de sortie (51) avant l'activation du dispositif de réduction de pression (5) et la ferme moins ou la libère complètement après l'activation du dispositif de réduction de pression (5).

5. Agencement de sac à gaz selon la revendication 4, **caractérisé en ce que** le dispositif de réduction de pression (5) comporte un dispositif de mise à disposition de gaz (54) qui gonfle l'élément gonflable (52) lors de l'activation du dispositif de réduction de pression (5) de telle manière qu'il se détache du sac à gaz (22) et ferme moins ou libère complètement l'ouverture de sortie (51).

6. Agencement de sac à gaz selon la revendication 5, **caractérisé par** un générateur de gaz (23) pour le gonflage du sac à gaz (22), le dispositif de mise à disposition de gaz (54) étant différent du générateur de gaz (23).

7. Agencement de sac à gaz selon l'une quelconque des revendications précédentes, **caractérisé en ce que** le dispositif de réduction de pression (5) présente un dispositif de mise à disposition de moyen de refroidissement (50) pour la génération ou l'introduction d'un moyen de refroidissement (501) dans le sac à gaz (22) gonflé au moins en partie.

8. Agencement de sac à gaz selon l'une quelconque des revendications précédentes, **caractérisé en ce que** le dispositif de réduction de pression (5) comporte un dispositif de génération d'ouverture de sortie (510) qui agit lors de l'activation du dispositif de réduction de pression (5) par voie thermique et/ou mécanique sur le sac à gaz (22) de telle manière qu'une ouverture de sortie apparaisse dans le sac à gaz (22).

9. Agencement de sac à gaz selon l'une quelconque des revendications précédentes, **caractérisé en ce que** le dispositif (6) pour le déplacement est réalisé de manière autocommandée de sorte qu'il exerce une force sur le sac à gaz (22) qui déplace au moins une section partielle du sac à gaz gonflé (22) hors du champ de vision d'un occupant de véhicule dès que la pression interne de sac à gaz tombe sous une valeur prescriptible.

10. Agencement de sac à gaz selon l'une quelconque des revendications précédentes, **caractérisé en ce que** le dispositif (6) pour le déplacement est réalisé de sorte qu'il soit activable par un signal de commande d'un dispositif de commande.

11. Agencement de sac à gaz selon l'une quelconque des revendications précédentes, **caractérisé en ce que** le dispositif (6) pour le déplacement présente au moins un élément de liaison (61, 61a, 61b) qui est relié avec une première section (611, 611a, 611b) au sac à gaz (22) et aussi relié avec une seconde section (612, 612a, 612b) au sac à gaz (22) ou peut être relié au véhicule (1).

12. Agencement de sac à gaz selon la revendication 11, **caractérisé en ce que** le dispositif (6) pour le déplacement comporte des moyens de génération de force de rappel (62) pour la génération d'une force de rappel sur le sac à gaz au moins en partie gonflé (22), l'élément de liaison (61, 61a, 61b) étant relié par les moyens de génération de force de rappel (62) au sac à gaz (22) ou pouvant être relié au véhicule (1).

13. Agencement de sac à gaz selon la revendication 12, **caractérisé en ce que** les moyens de génération de force de rappel (62) présentent un ressort coopérant avec l'élément de liaison (61, 61a, 61b) qui se tend sous la traction apparaissant lors du dépliage du sac à gaz (22) de l'élément de liaison (61, 61a, 61b).

14. Agencement de sac à gaz selon la revendication 12 ou 13, **caractérisé en ce que** les moyens de génération de force de rappel (62) présentent un dispositif d'enroulement (621) pour l'enroulement de l'élément de liaison (61, 61a, 61b), le dispositif d'enroulement coagissant par le biais d'un arbre (613) avec le ressort réalisé comme ressort à boudin (614).

15. Agencement de sac à gaz selon l'une quelconque des revendications précédentes, **caractérisé en ce que** le sac à gaz (22) présente une première et une seconde zone partielle (222, 223), le dispositif de réduction de pression (5) étant réalisé et agencé de sorte que la chute de pression soit plus grande après l'activation du dispositif de réduction de pression (5) dans la première zone partielle (222) que dans la seconde zone partielle (223).
